# EUROPEAN PATENT APPLICATION

(11) **EP 4 606 836 A1**
(43) Date of publication of application: **27.08.2025**
(21) Application number: 23879686.6
(22) Date of filing: 11.10.2023
(51) Int. Cl.: C08G 61/06

(54) **CATALYST LIQUID AND POLYMERIZABLE COMPOSITION**

(30) Priority: 20.10.2022 JP 2022168588
(71) Applicant: RIMTEC Corporation, Tokyo 100-0005 (JP)
(72) Inventor: TAKEUCHI, Masaki, Tokyo 100-0005 (JP); HARA, Atsushi, Tokyo 100-0005 (JP)
(74) Representative: Kraus & Lederer PartGmbB
(86) International application number: PCT/JP2023/036933
(87) International publication number: WO 2024/085043

(57) **Abstract**

Provided is a catalyst solution comprising a metathesis polymerization catalyst, a coordinating compound containing a phosphorus atom, and a solvent, wherein the metathesis polymerization catalyst is a ruthenium-carbene complex represented by General Formula (1) or (2) below, and the coordinating compound containing a phosphorus atom is contained in an amount such that 6 to 1000 mol of phosphorus atoms are contained relative to 1 mol of ruthenium atoms in the metathesis polymerization catalyst.

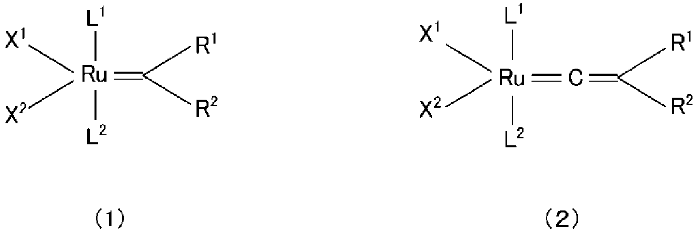

## Description

### TECHNICAL FIELD

The present invention relates to a catalyst solution which has high storage stability and demonstrates high catalytic activity even after long-term storage, and a polymerizable composition obtained using such a catalyst solution.

### BACKGROUND ART

Norbornene-based resins obtained by ring-opening polymerization of a norbornene-based monomer are known for their high mechanical strength, high heat resistance, low hygroscopicity, excellent dielectric properties, and the like, and are used in various applications.

For example, as a metathesis polymerization catalyst used for ring-opening polymerization of norbornene-based monomers, Patent Document 1 discloses a ruthenium-carbene complex containing phosphines as ligands. In addition, Patent Document 1 also discloses a polymerizable composition comprising such a ruthenium-carbene complex.

However, the ruthenium-carbene complex disclosed in Patent Document 1, which is usually dissolved or dispersed in a solvent and used as a catalyst solution, has a problem of insufficient storage stability during storage as a catalyst solution.

### RELATED ART DOCUMENT

### PATENT DOCUMENT

Patent Document 1: JP 2001-139668 A

### SUMMARY OF THE INVENTION

### PROBLEM TO BE SOLVED BY THE INVENTION

An object of the present invention is to provide a catalyst solution which has high storage stability and demonstrates high catalytic activity even after long-term storage.

### MEANS FOR SOLVING PROBLEMS

The present inventor, who has conducted extensive research to achieve the above object, has found that by blending a specific amount of a coordinating compound containing a phosphorus atom with a catalyst solution containing a ruthenium-carbene complex containing phosphines as ligands, as a metathesis polymerization catalyst, a catalyst solution which has high storage stability and is capable of demonstrating high catalytic activity even after long-term storage can be provided. This finding has led to completion of the present invention.

Specifically, the present invention provides the following embodiments.
[1] A catalyst solution comprising a metathesis polymerization catalyst, a coordinating compound containing a phosphorus atom, and a solvent,
   wherein the metathesis polymerization catalyst is a ruthenium-carbene complex represented by General Formula (1) or (2) below, and
   the coordinating compound containing a phosphorus atom is contained in an amount such that 6 to 1000 mol of phosphorus atoms are contained relative to 1 mol of ruthenium atoms in the metathesis polymerization catalyst: 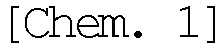 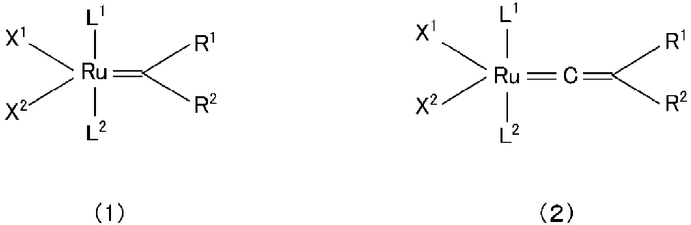 where in General Formulae (1) and (2) above, R¹ and R² each independently represent a hydrogen atom; a halogen atom; or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring; X¹ and X² each independently represent any anionic ligand; L¹ and L² each represent a heteroatom-containing carbene compound or phosphines; and at least one of L¹ and L² is phosphines.
[2] The catalyst solution according to [1], wherein L¹ is a compound represented by General Formula (3) or (4) below, and L² is phosphines: 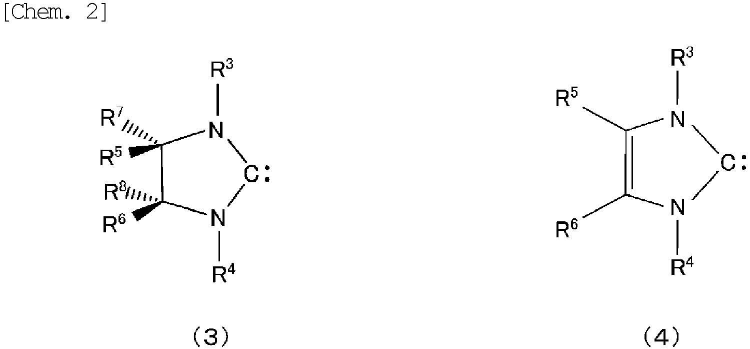 where in General Formulae (3) and (4) above, R³, R⁴, R⁵, R⁶, R⁷, and R⁸ each independently represent a hydrogen atom; a halogen atom; or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring.
[3] The catalyst solution according to [1] or [2], wherein the phosphines are an optionally substituted trialkylphosphine.
[4] The catalyst solution according to any one of [1] to [3], wherein the coordinating compound containing phosphorus atom is a compound represented by General Formula (5) below: 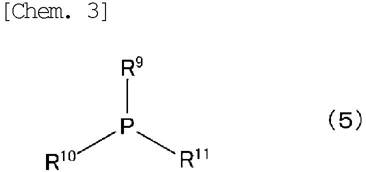 where in General Formula (5) above, R⁹ to R¹¹ each independently represent an optionally substituted alkyl group or an optionally substituted aryl group.
[5] A polymerizable composition comprising the catalyst solution according to any one of [1] to [4], and a norbornene-based monomer as a polymerizable monomer.

### EFFECTS OF THE INVENTION

The present invention provides a catalyst solution which has high storage stability and demonstrates high catalytic activity even after long-term storage, and a polymerizable composition prepared using such a catalyst solution.

### DESCRIPTION OF EMBODIMENTS

### <Catalyst solution>

The catalyst solution according to the present invention is a catalyst solution comprising a metathesis polymerization catalyst, a coordinating compound containing a phosphorus atom, and a solvent,
wherein the metathesis polymerization catalyst is a ruthenium-carbene complex represented by General Formula (1) or (2) described later, and
the coordinating compound containing a phosphorus atom is contained in an amount such that 6 to 1000 mol of phosphorus atoms are contained relative to 1 mol of ruthenium atoms in the metathesis polymerization catalyst.

The metathesis polymerization catalyst used in the present invention is a ruthenium-carbene complex represented by General Formula (1) or (2) below:

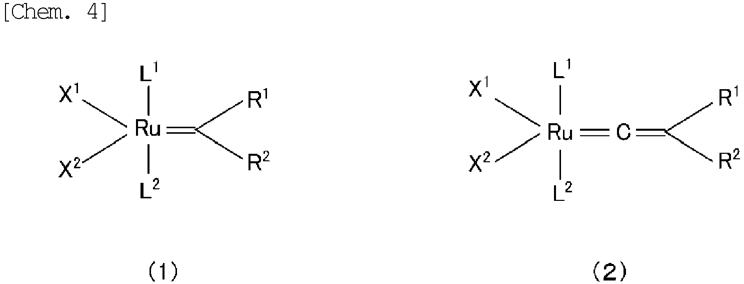

In General Formulae (1) and (2) above, R¹ and R² each independently represent a hydrogen atom; a halogen atom; or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring. Examples of the ring containing R¹ and R² that are bonded to each other include optionally substituted indenylidene groups, such as a phenylindenylidene group.

Specific examples of the C₁ to C₂₀ organic groups which may contain a halogen atom, an oxygen atom, a nitrogen atom, a sulfur atom, a phosphorus atom, or a silicon atom include C₁ to C₂₀ alkyl groups, C₂ to C₂₀ alkenyl groups, C₂ to C₂₀ alkynyl groups, C₆ to C₂₀ aryl groups, C₁ to C₂₀ alkoxy groups, C₂ to C₂₀ alkenyloxy groups, C₂ to C₂₀ alkynyloxy groups, C₆ to C₂₀ aryloxy groups, C₁ to C₈ alkylthio groups, a carbonyloxy group, C₁ to C₂₀ alkoxycarbonyl groups, C₁ to C₂₀ alkylsulfonyl groups, C₁ to C₂₀ alkylsulfinyl groups, C₁ to C₂₀ alkylsulfonic acid groups, C₆ to C₂₀ arylsulfonic acid groups, a phosphonic acid group, C₆ to C₂₀ arylphosphonic acid groups, C₁ to C₂₀ alkylammonium groups, C₆ to C₂₀ arylammonium groups, and the like. These C₁ to C₂₀ organic groups which may contain a halogen atom, an oxygen atom, a nitrogen atom, a sulfur atom, a phosphorus atom, or a silicon atom may be substituted. Examples of substituents include C₁ to C₁₀ alkyl groups, C₁ to C₁₀ alkoxy groups, C₆ to C₁₀ aryl groups, and the like.

X¹ and X² each independently represent any anionic ligand. The anionic ligand is a ligand having a negative charge when separated from a central metal atom, and examples thereof include halogen atoms, diketonate groups, substituted cyclopentadienyl groups, alkoxyl groups, aryloxy groups, a carboxyl group, and the like.

L¹ and L² each represent a heteroatom-containing carbene compound or phosphines, and at least one of L¹ and L² is phosphines.

The heteroatom-containing carbene compound is preferably a compound represented by General Formula (3) or (4) below. To improve catalytic activity, more preferred is a compound represented by General Formula (3) below:

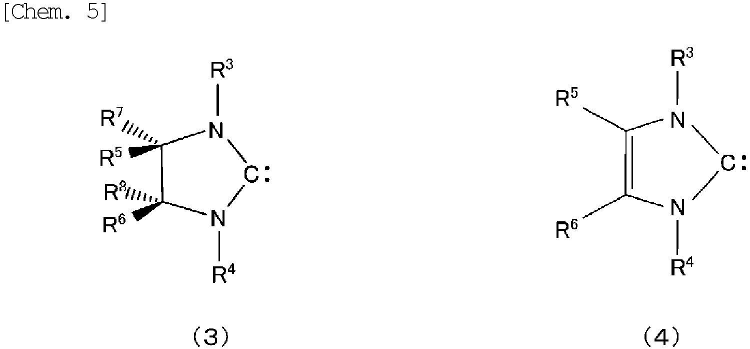

In General Formulae (3) and (4) above, R³, R⁴, R⁵, R⁶, R⁷, and R⁸ each independently represent a hydrogen atom; a halogen atom; or a C₁ to C₂₀ organic group which may contain a halogen atom, an oxygen atom, a nitrogen atom, a sulfur atom, a phosphorus atom, or a silicon atom. Specific examples of the C₁ to C₂₀ organic group which may contain a halogen atom, an oxygen atom, a nitrogen atom, a sulfur atom, a phosphorus atom, or a silicon atom are the same as those listed in General Formulae (1) and (2) above.

R³, R⁴, R⁵, R⁶, R⁷, and R⁸ may also be bonded to each other in any combination to form a ring.

R⁵, R⁶, R⁷, and R⁸ in General Formula (3) above and R⁵ and R⁶ in General Formula (4) above are preferably a hydrogen atom because the effects of the present invention become more prominent. R³ and R⁴ are preferably an optionally substituted aryl group, more preferably a phenyl group having a C₁ to C₁₀ alkyl group as a substituent, still more preferably a mesityl group.

The phosphines are not particularly limited. From the viewpoint of catalytic activity, examples thereof include optionally substituted trialkylphosphines, optionally substituted triarylphosphines, and the like. Preferred are optionally substituted trialkylphosphines, and more preferred are unsubstituted trialkylphosphines. Specific examples of the unsubstituted trialkylphosphines include trimethylphosphine, triethylphosphine, tri-n-propylphosphine, tri-n-butylphosphine, tri-n-octylphosphine, tri-n-octadecylphosphine, tricyclopentylphosphine, tricyclohexylphosphine, and the like. Among these, tricycloalkylphosphines are more preferred, and tricyclohexylphosphine is particularly preferred.

In General Formulae (1) and (2) above, R¹, R², X¹, X², L¹, and L² may stand alone, and/or may be bonded to each other in any combination to form a multidentate chelating ligand.

The metathesis polymerization catalyst used in the present invention is preferably a compound in which L¹ is represented by General Formula (3) or (4) above and L² is phosphines. Specific examples of the compound represented by General Formula (3) or (4) above include 1,3-di(1-adamantyl)imidazolidin-2-ylidene, 1,3-dimesityloctahydrobenzimidazol-2-ylidene, 1,3-di(1-phenylethyl)-4-imidazolin-2-ylidene, 1,3,4-triphenyl-2,3,4,5-tetrahydro-1H-1,2,4-triazol-5-ylidene, 1,3-dicyclohexylhexahydropyrimidin-2-ylidene, N,N,N',N'-tetraisopropyl, benzylidene(1,3-dimesitylimidazolidin-2-ylidene), 1,3-dimesitylimidazolidin-2-ylidene, 1,3-dicyclohexylimidazolidin-2-ylidene, 1,3-diisopropyl-4-imidazolin-2-ylidene, 1,3-dimesityl-2,3-dihydrobenzimidazol-2-ylidene, and the like. Among these, 1,3-dimesitylimidazolidin-2-ylidene is preferred.

The metathesis polymerization catalyst used in the present invention is a ruthenium-carbene complex represented by General Formula (1) or (2) above, and is preferably a ruthenium-carbene complex represented by General Formula (1) above. Specific examples of the metathesis polymerization catalyst represented by General Formula (1) above include benzylidene(1,3-dimesitylimidazolidin-2-ylidene) (tricyclohexylphosphine) ruthenium dichloride, (1,3-dimesitylimidazolidin-2-ylidene) (3-methyl-2-buten-1-ylidene) (tricyclopentylphosphine) ruthenium dichloride, benzylidene(1,3-dimesityl-octahydrobenzimidazol-2-ylidene) (tricyclohexylphosphine) ruthenium dichloride, benzylidene[1,3-di(1-phenylethyl)-4-imidazolin-2-ylidene] (tricyclohexylphosphine) ruthenium dichloride, benzylidene(1,3-dimesityl-2, 3-dihydrobenzimidazol-2-ylidene) (tricyclohexylphosphine) ruthenium dichloride, benzylidene(tricyclohexylphosphine)(1,3,4-triphenyl-2,3,4,5-tetrahydro-1H-1,2,4-triazol-5-ylidene)ruthenium dichloride, (1,3-diisopropylhexahydropyrimidin-2-ylidene) (ethoxymethylene) (tricyclohexylphosphine) ruthenium dichloride, benzylidene (1, 3-dimesitylimidazolidin-2-ylidene)pyridine ruthenium dichloride, and the like. Among these, from the viewpoint of further enhancing the effects of the present invention, preferred are benzylidene(1,3-dimesitylimidazolidin-2-ylidene) (tricyclohexylphosphine) ruthenium dichloride and (1,3-dimesitylimidazolidin-2-ylidene) (3-methyl-2-buten-1-ylidene) (tricyclohexylphosphine)ruthenium dichloride.

The catalyst solution according to the present invention comprises a coordinating compound containing a phosphorus atom, and the coordinating compound containing a phosphorus atom is contained in an amount such that 6 to 1000 mol of phosphorus atoms are contained relative to 1 mol of ruthenium atoms in the metathesis polymerization catalyst. In the present invention, the catalyst solution contains a specific amount of the coordinating compound containing a phosphorus atom. Thereby, even when a catalyst solution is prepared by dissolving or dispersing the metathesis polymerization catalyst in a solvent, the resulting catalyst solution has high storage stability, and thus can demonstrate high catalytic activity even after long-term storage.

It is sufficient that the coordinating compound containing a phosphorus atom is a compound that comprises a phosphorus atom and has coordinating properties, and thus acts as a Lewis base. However, from the viewpoint of further enhancing the effects of the present invention, preferred is a compound represented by General Formula (5) below:

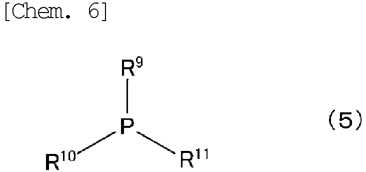

In General Formula (5) above, R⁹ to R¹¹ each independently represent an optionally substituted alkyl group or an optionally substituted aryl group. Among these, preferred are optionally substituted aryl groups. Examples of the optionally substituted aryl groups include unsubstituted aryl groups such as a phenyl group, aryl groups having an electron-donating group as a substituent, such as a tolyl group, a methoxyphenyl group, and an ethoxyphenyl group, and the like. In General Formula (5) above, R⁹ to R¹¹ may be the same or different. Preferably, R⁹ to R¹¹ are the same group.

Examples of the compound represented by General Formula (5) above include, but should not be limited to, triphenylphosphine, tri-p-tolylphosphine, tri-m-tolylphosphine, tri-o-tolylphosphine, cyclohexyldiphenylphosphine, trimethoxyphenylphosphine, triethoxyphenylphosphine, and the like. These compounds represented by General Formula (5) above may be used alone, or may be used in combination. Among these, triphenylphosphine and trimethoxyphenylphosphine are preferred, and use of triphenylphosphine in combination with trimethoxyphenylphosphine is also preferred. When triphenylphosphine is used in combination with trimethoxyphenylphosphine, as the proportions of these used in term of a phosphorus atom, the molar ratio of "triphenylphosphine:trimethoxyphenylphosphine" is preferably 1:2 to 10:1, more preferably 1:1 to 5:1.

The catalyst solution according to the present invention contains the coordinating compound containing a phosphorus atom in an amount such that 6 to 1000 mol, preferably 10 to 850 mol, more preferably 20 to 700 mol, still more preferably 40 to 500 mol, particularly preferably 120 to 200 mol of phosphorus atoms are contained relative to 1 mol of ruthenium atoms in the metathesis polymerization catalyst. The catalyst solution according to the present invention contains the coordinating compound containing a phosphorus atom in a weight-based amount of preferably 2 to 320 parts by mass, more preferably 3 to 270 parts by mass, still more preferably 6 to 220 parts by mass, further still more preferably 15 to 160 parts by mass, particularly preferably 35 to 65 parts by mass relative to 1 part by mass of the metathesis polymerization catalyst. If the content of the coordinating compound containing a phosphorus atom is too small, a catalyst solution having reduced storage stability is obtained. On the other hand, if the content of the coordinating compound containing a phosphorus atom is too large, a polymerizable composition prepared by blending a norbornene-based monomer as a polymerizable monomer may have insufficient catalytic activity, and thus the polymerization reaction may not sufficiently proceed.

The catalyst solution according to the present invention also contains a solvent in addition to the metathesis polymerization catalyst and the coordinating compound containing a phosphorus atom. The solvent can be an inert solvent to the metathesis polymerization catalyst and the coordinating compound containing a phosphorus atom and is not particularly limited. Examples thereof include aromatic hydrocarbons such as toluene, xylene, ethylbenzene, and trimethylbenzene; ketones such as methyl ethyl ketone, cyclopentanone, cyclohexanone, 2-heptanone, and 4-hydroxy-4-methyl-2-pentanone; cyclic ethers such as tetrahydrofuran; diethyl ether, dichloromethane, dimethyl sulfoxide, ethyl acetate, and the like. Among these, ketones are preferred, and cyclopentanone is more preferred. These solvents may be used alone or in combination.

The content of the solvent in the catalyst solution according to the present invention is not particularly limited, and can be appropriately selected according to the viscosity or the like of the catalyst solution. The content thereof is preferably 10 to 1000 parts by mass, more preferably 20 to 800 parts by mass, still more preferably 30 to 500 parts by mass relative to 1 part by mass of the metathesis polymerization catalyst.

The catalyst solution according to the present invention can be prepared by any method, and can be prepared by mixing the metathesis polymerization catalyst, the coordinating compound containing a phosphorus atom, and the solvent.

### <Polymerizable composition>

The polymerizable composition according to the present invention comprises the above-mentioned catalyst solution according to the present invention, and a norbornene-based monomer as a polymerizable monomer.

It is sufficient that the norbornene-based monomer is a compound having a norbornene ring structure, and examples thereof include, but should not be limited to, bicyclic compounds such as norbornene and norbornadiene; tricyclic compounds such as dicyclopentadiene; tetracyclic compounds such as tetracyclododecene; pentacyclic compounds such as tricyclopentadiene; heptacyclic compounds such as tetracyclopentadiene; derivatives thereof having a C₂ to C₁₀ alkenyl group, a C₂ to C₁₀ alkynyl group, a C₁ to C₁₀ alkylidene group, an epoxy group, or a (meth)acrylic group [CH₂=CHCH₂- and/or CH₂=C(CH₃)CH₂-]; and the like. In this specification, the term "(meth)acrylic group" indicates an acrylic group and/or a methacrylic group (hereinafter, the same applies to the "(meth)acryloyl group" and the like). These norbornene-based monomers can be used alone or in combination. As the norbornene-based monomer, the tricyclic compounds are preferred, and dicyclopentadiene is particularly preferred to further enhance the effects of the present invention. The norbornene-based monomer to be used preferably contains 50% by mass or more of a tricyclic compound, especially dicyclopentadiene.

The content of the norbornene-based monomer in the polymerizable composition according to the present invention is preferably 80 to 100% by mass, more preferably 80 to 99.5% by mass, still more preferably 85 to 99% by mass, particularly preferably 87 to 98% by mass in 100% by mass of the entire polymerizable monomer contained in the polymerizable composition, although not particularly limited thereto. When the content of the norbornene-based monomer falls within the above ranges, a norbornene-based resin having further increased strength can be obtained.

In the present invention, a monocyclic cycloolefin may be further used as a polymerizable monomer contained in the polymerizable composition.

Examples of monocyclic cycloolefins include, but should not be limited to, cyclobutene, cyclopentene, cyclohexene, cyclooctene, cyclododecene, cyclopentadiene, 1,4-cyclohexadiene, 1,5-cyclooctadiene, derivatives thereof having a C₂ to C₁₀ alkenyl group, a C₂ to C₁₀ alkynyl group, a C₁ to C₁₀ alkylidene group, an epoxy group, or a (meth)acrylic group, and the like. These monocyclic cycloolefins can be used alone or in combination.

The polymerizable composition according to the present invention may also contain, in addition to the norbornene-based monomer and the monocyclic cycloolefin used as needed, a different polymerizable monomer polymerizable with these. Examples of different polymerizable monomers include other cycloolefin monomers, (meth)acrylate monomers such as phenoxyethylene glycol (meth)acrylate, and the like.

In the polymerizable composition according to the present invention, the content of the different polymerizable monomer other than the norbornene-based monomer is not particularly limited. The content thereof is preferably 50% by mass or less, more preferably 40% by mass or less, still more preferably 30% by mass or less in 100% by mass of the total polymerizable monomers contained in the polymerizable composition, and can be 0% by mass.

The lower limit of the content of the total polymerizable monomers in the polymerizable composition according to the present invention can be preferably 10% by mass or more, more preferably 15% by mass or more, still more preferably 20% by mass or more, further still more preferably 50% by mass or more, particularly preferably 80% by mass or more in 100% by mass of the entire polymerizable composition, and the upper limit of the content of the total polymerizable monomers can be preferably 99.5% by mass or less, more preferably 99% by mass or less, still more preferably 95% by mass or less, further still more preferably 93% by mass or less, particularly preferably 90% by mass or less in 100% by mass of the entire polymerizable composition.

The content of the metathesis polymerization catalyst in the polymerizable composition according to the present invention is preferably 0.005 mmol or more, more preferably 0.01 to 50 mmol, still more preferably 0.015 to 20 mmol, particularly preferably 1 to 3 mmol relative to 1 mol of the total amount of the polymerizable monomers including a cyclic olefin monomer. The weight-based content of the metathesis polymerization catalyst in the polymerization composition according to the present invention is preferably 0.004 parts by mass or more, more preferably 0.008 to 45 parts by mass, still more preferably 0.012 to 20 parts by mass, particularly preferably 0.8 to 2.5 parts by mass relative to 10000 parts by mass of the total amount of the polymerizable monomers including a cyclic olefin monomer.

Furthermore, in addition to the coordinating compound containing a phosphorus atom contained in the catalyst solution according to the present invention, an additional coordinating compound containing a phosphorus atom may be further added to the polymerizable composition according to the present invention to adjust the polymerization reaction time (curing time). Here, as the additional coordinating compound containing a phosphorus atom to be added, the same coordinating compound containing a phosphorus atom as that contained in the catalyst solution according to the present invention can be used, or a coordinating compound having a plurality of phosphorus atoms can be used. These can be used alone or in combination. Moreover, the additional coordinating compound containing a phosphorus atom to be added may be the same compound as the coordinating compound containing a phosphorus atom contained in the catalyst solution according to the present invention, or may be a different compound.

When the additional coordinating compound containing a phosphorus atom is added, the amount of the additional coordinating compound containing a phosphorus atom to be added is not particularly limited, and can be determined according to the polymerization reaction time (curing time). The total amount (based on phosphorus atoms) of the coordinating compound containing a phosphorus atom contained in the polymerizable composition according to the present invention (namely, the total amount of the coordinating compound containing a phosphorus atom contained in the catalyst solution according to the present invention and the additional coordinating compound containing a phosphorus atom to be added) is preferably 6 to 2000 mol, more preferably 10 to 1700 mol, still more preferably 20 to 1400 mol, further still more preferably 40 to 1000 mol, particularly preferably 120 to 400 mol relative to 1 mol of ruthenium atoms in the metathesis polymerization catalyst contained in the polymerizable composition. As the weight-based content of the coordinating compound containing a phosphorus atom in the polymerizable composition according to the present invention, the total amount of the coordinating compound containing a phosphorus atom (namely, the total amount of the coordinating compound containing a phosphorus atom contained in the catalyst solution according to the present invention and the additional coordinating compound containing a phosphorus atom to be added) is preferably 2 to 630 parts by mass, more preferably 3 to 540 parts by mass, still more preferably 6 to 450 parts by mass, further still more preferably 15 to 350 parts by mass, particularly preferably 35 to 150 parts by mass relative to 1 part by mass of the metathesis polymerization catalyst.

The polymerizable composition according to the present invention may also contain a radical generator, a diisocyanate compound, a polyfunctional (meth)acrylate compound, a coupling agent, and other optional components as desired.

The radical generator, when heated, generates radicals, by which the radical generator induces a cross-linking reaction in a norbornene-based resin. The sites at which the radical generator induces the cross-linking reaction are mainly carbon-carbon double bonds contained in the norbornene-based resin while saturated bonds may also be cross-linked in some cases. Examples of the radical generator include organic peroxides, diazo compounds, and nonpolar radical generators.

The content of the radical generator in the polymerizable composition according to the present invention is preferably 0.1 to 10 parts by mass, more preferably 0.5 to 5 parts by mass relative to 100 parts by mass of the total polymerizable monomers.

Examples of the diisocyanate compounds include aromatic diisocyanate compounds such as methylenediphenyl 4,4'-diisocyanate (MDI), toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 1,4-phenylene diisocyanate, tolylene diisocyanate, xylylene diisocyanate (XDI), 1,5-naphthalene diisocyanate, benzidine diisocyanate, o-nitrobenzidine diisocyanate, and dibenzyl 4,4'-diisocyanate; aliphatic diisocyanate compounds such as methylene diisocyanate, 1,4-tetramethylene diisocyanate, 1,6-hexamethylene diisocyanate, and 1,10-decamethylene diisocyanate; alicyclic diisocyanate compounds such as 4-cyclohexylene diisocyanate, 4,4'-methylene bis(cyclohexyl isocyanate), 1,5-tetrahydronaphthalene diisocyanate, isophorone diisocyanate, hydrogenated MDI, and hydrogenated XDI; polyurethane prepolymers terminated with isocyanate, which are prepared by reacting these diisocyanate compounds with a low molecular weight polyol or polyamine; and the like. In addition, known isocyanurate forms, biuret forms, adduct forms, or polymeric forms of these compounds, which have a polyfunctional isocyanate group and are conventionally used, can be used without limitation. Examples thereof include dimers of 2,4-tolylene diisocyanate, triphenylmethane triisocyanate, tris-(p-isocyanate phenyl)thiophosphite, polyfunctional aromatic isocyanate compounds, polyfunctional aromatic aliphatic isocyanate compounds, polyfunctional aliphatic isocyanate compounds, fatty acid-modified polyfunctional aliphatic isocyanate compounds, block-type polyfunctional isocyanate compounds such as blocked polyfunctional aliphatic isocyanate compounds, polyisocyanate prepolymers, and the like. Among these, suitably used are aromatic diisocyanate compounds, aliphatic diisocyanate compounds, and alicyclic diisocyanate compounds, which are non-block-type polyfunctional isocyanate compounds, because of their availability and ease in handling.

These compounds can be used alone or in combination.

The block-type polyfunctional isocyanate compound indicates an isocyanate compound having at least two isocyanate groups in the molecule which are inactivated at normal temperature through a reaction with an active hydrogen-containing compound. The isocyanate compound usually has a structure having isocyanate groups masked with a blocking agent, examples of the blocking agent including alcohols, phenols, ε-caprolactam, oximes, active methylene compounds, and the like. The block-type polyfunctional isocyanate compound is usually not reactive at normal temperature, leading to high storage stability, while it exhibits high reactivity due to the isocyanate groups regenerated when heated usually at 140 to 200°C.

These diisocyanate compounds may be used alone or in combination. The amount of the diisocyanate compound included in the polymerizable composition according to the present invention is preferably 0.5 to 20 parts by mass, more preferably 1 to 15 parts by mass, still more preferably 2 to 10 parts by mass relative to 100 parts by mass of the total polymerizable monomers used in the reaction.

From the viewpoint of further increasing the adhesive strength of the norbornene-based resin to other materials for forming a composite material with such other materials, a polyfunctional (meth)acrylate compound may be used. It is estimated that when a polyfunctional (meth)acrylate compound is used in combination with the diisocyanate compound, an active hydrogen reactive group in the diisocyanate compound forms a chemical bond with a hydroxyl group in the polyfunctional (meth)acrylate compound to further increase the adhesive strength to other materials. Preferred examples of the polyfunctional (meth)acrylate compound include ethylene glycol dimethacrylate, triethylene glycol dimethacrylate, trimethylolpropane trimethacrylate, and neopentyl glycol dimethacrylate.

These polyfunctional (meth)acrylate compounds may be used alone or in combination. The amount of the polyfunctional (meth)acrylate compound contained in the polymerizable composition is preferably 0.5 to 20 parts by mass, more preferably 1 to 15 parts by mass, still more preferably 2 to 10 parts by mass relative to 100 parts by mass of the total polymerizable monomers used in the reaction.

The coupling agent is not particularly limited, but from the viewpoint of improving the adhesive properties of the norbornene-based resin to other materials for forming a composite material with such other materials, preferred are silane coupling agents containing at least one hydrocarbon group having a norbornene structure (norbornene skeleton). Specific examples of such silane coupling agents include bicycloheptenyltrimethoxysilane, bicycloheptenyltriethoxysilane, bicycloheptenylethyltrimethoxysilane, bicycloheptenylethyltriethoxysilane, bicycloheptenylhexyltrimethoxysilane, bicycloheptenylhexyltriethoxysilane, and the like. Preferred are bicycloheptenylethyltrimethoxysilane, bicycloheptenylethyltriethoxysilane, bicycloheptenylhexyltrimethoxysilane, and bicycloheptenylhexyltriethoxysilane, more preferred are bicycloheptenylethyltrimethoxysilane and bicycloheptenylethyltriethoxysilane, and still more preferred is bicycloheptenylethyltrimethoxysilane.

The content of the silane coupling agent having at least one hydrocarbon group having a norbornene structure in the polymerizable composition according to the present invention is preferably 0.1 to 5% by mass, more preferably 0.3 to 2% by mass, still more preferably 0.5 to 1% by mass.

The polymerizable composition according to the present invention may also contain a silane coupling agent without a hydrocarbon group having a norbornene structure, and coupling agents other than the silane coupling agents, such as thiol coupling agents, aluminate coupling agents, titanate coupling agents, and fatty acid esters.

Examples of other optional components include activating agents, elastomers, antioxidants (anti-aging agents), colorants, light stabilizers, flame retardants, and the like.

The activating agent is a compound which acts as a cocatalyst for the above-mentioned metathesis polymerization catalyst to improve the polymerization activity of the catalyst. Examples of activating agents to be used include alkylaluminum halides such as ethylaluminum dichloride and diethylaluminum chloride; alkoxyalkylaluminum halides prepared by substituting part of alkyl groups in these alkylaluminum halides with alkoxy groups; organic tin compounds; and the like. The activating agent can be used in any amount, and the amount is preferably 0.1 to 100 mol, more preferably 1 to 10 mol relative to 1 mol of the total metathesis polymerization catalysts used in the polymerizable composition.

Examples of elastomers include natural rubber, polybutadiene, polyisoprene, styrene-butadiene copolymers (SBR), styrene-butadiene-styrene copolymers (SBS), styrene-isoprene-styrene copolymers (SIS), ethylenepropylene-diene terpolymers (EPDM), ethylene-vinyl acetate copolymers (EVA), hydrides thereof, and the like. The viscosity of the elastomer can be adjusted for use by dissolving the elastomer in the polymerizable composition. By adding the elastomer, a norbornene-based resin having improved impact resistance can be formed through bulk polymerization of the composition. The amount of the elastomer to be used is preferably 0.5 to 20 parts by mass, more preferably 2 to 10 parts by mass relative to 100 parts by mass of the total polymerizable monomers in the polymerizable composition.

Examples of antioxidants (anti-aging agents) include a variety of antioxidants for plastics and rubber, such as phenol antioxidants, phosphorus antioxidants, amine antioxidants, and the like.

The colorants to be used are dyes, pigments, and the like. The dyes have a huge variety, and known one may be appropriately selected for use. Examples of pigments include carbon black, graphite, chrome yellow, iron oxide yellow, titanium dioxide, zinc oxide, trilead tetraoxide, red lead oxide, chromium oxide, Prussian blue, titanium black, and the like.

Examples of light stabilizers include benzotriazole-based ultraviolet absorbing agents, benzophenone-based ultraviolet absorbing agents, salicylate-based ultraviolet absorbing agents, cyano acrylate-based ultraviolet absorbing agents, oxanilide-based ultraviolet absorbing agents, hindered amine-based ultraviolet absorbing agents, benzoate-based ultraviolet absorbing agents, and the like.

Examples of flame retardants include phosphorus-based flame retardants, nitrogen-based flame retardants, halogen-based flame retardants, metal hydroxide-based flame retardants such as aluminum hydroxide and magnesium hydroxide, and the like.

The polymerizable composition according to the present invention may contain a filler as an optional component. A variety of fillers can be used as a filler without limitation, but preferably a particulate inorganic filler is used.

The particulate inorganic filler has an aspect ratio of preferably 1 to 2, more preferably 1 to 1.5. The particulate inorganic filler has a 50% volume cumulative diameter of preferably 0.1 to 50 µm, more preferably 1 to 30 µm, particularly preferably 1 to 10 µm. The aspect ratio indicates the ratio of the average major axis diameter of the filler to the 50% volume cumulative diameter thereof. Here, the average major axis diameter indicates the number average major axis diameter obtained by measuring the lengths of 100 fillers selected at random in an optical microscope image and calculating the arithmetic average value of the lengths. The 50% volume cumulative diameter indicates a value determined by measuring the particle size distribution by an X-ray transmission method.

Specific examples of the particulate inorganic filler include calcium carbonate, calcium hydroxide, calcium silicate, calcium sulfate, aluminum hydroxide, magnesium hydroxide, titanium oxide, zinc oxide, barium titanate, silica, alumina, gadolinia, carbon black, graphite, antimony oxide, red phosphorus, various metal powders, metal alloy powders, clay, various types of ferrite, hydrotalcite, and the like. Among these, magnesium hydroxide, aluminum hydroxide, silica, and alumina are preferred, and aluminum hydroxide and silica are particularly preferred.

The particulate inorganic filler may have a surface subjected to a hydrophobilizing treatment. When such a hydrophobilized particulate inorganic filler is used, coagulation and precipitation of the particulate inorganic filler in a polymerizable composition can be prevented, and the particulate inorganic filler in the obtained norbornene-based resin can be uniformly dispersed. As a result, the strength of the norbornene-based resin can be further improved. Examples of agents used for a hydrophobilizing treatment include silane coupling agents such as vinylsilane, titanate coupling agents, aluminum coupling agents, fatty acids such as stearic acid, oils and fats, surfactants, waxes, and the like. The agent used for a hydrophobilizing treatment can be preliminarily reacted with a particulate inorganic filler to give a hydrophobilizing treatment to the surface thereof. Alternatively, the agent used for a hydrophobilizing treatment can be added to a polymer composition without preliminary reaction with a particulate inorganic filler to give a hydrophobilizing treatment to the surface of the particulate inorganic filler in the polymer composition.

The amount of the particulate inorganic filler included in the polymerizable composition according to the present invention is preferably 10 to 1000 parts by mass, more preferably 100 to 500 parts by mass relative to 100 parts by mass of the total polymerizable monomers.

The polymerizable composition according to the present invention may contain a fibrous inorganic filler in addition to the particulate inorganic filler. The fibrous inorganic filler has an aspect ratio of preferably 5 to 100, more preferably 10 to 50. The fibrous inorganic filler has a 50% volume cumulative diameter of preferably 0.1 to 50 µm, more preferably 1 to 30 µm.

Specific examples of the fibrous inorganic filler include glass fibers, wollastonite, potassium titanate, zonolite, basic magnesium sulfate, aluminum borate, tetrapod-shaped zinc oxide, gypsum fibers, phosphate fibers, alumina fibers, whisker calcium carbonate, whisker boehmite, and the like. Among these, preferred are wollastonite and whisker calcium carbonate. The surface of the fibrous inorganic filler may be subjected to a hydrophobilizing treatment as in the particulate inorganic filler described above.

The polymerizable composition according to the present invention is prepared by appropriately mixing the above-mentioned components with the above-mentioned catalyst solution according to the present invention according to a known method. The polymerizable composition according to the present invention may be prepared by preparing the catalyst solution according to the present invention and one or two or more different preparative liquid formulations such as a monomer solution, and mixing the catalyst solution with the different preparative liquid formulations such as a monomer solution using a mixing apparatus or the like immediately before forming a norbornene-based resin. The catalyst solution and the different preparative liquid formulations such as a monomer solution are prepared such that each of them alone is not capable of bulk polymerization, and when all of the solutions are mixed, they can form the polymerizable composition comprising the above-mentioned components in predetermined proportions (where the total content of the components is 100% by mass).

The optional components such as the radical generator, the diisocyanate compound, and the polyfunctional (meth)acrylate compound may be contained in any of the catalyst solution and the different preparative liquid formulations such as a monomer solution, or may be added in the form of a mixed solution other than these solutions.

Examples of the mixing apparatus used for mixing the catalyst solution with the different preparative liquid formulations such as a monomer solution include collision mixing apparatuses usually used in reaction injection molding, low pressure mixers such as a dynamic mixer and a static mixer, and the like.

### <Norbornene-based resin>

The norbornene-based resin according to the present invention is prepared through bulk polymerization of the above-described polymerizable composition according to the present invention.

Examples of the method for producing the norbornene-based resin according to the present invention include a method of directly mixing the above-mentioned catalyst solution with the different preparative liquid formulations such as a monomer solution, and a method in which bulk polymerization is performed within a mold or on a substrate using a collision mixing apparatus which instantaneously mixes these solutions introduced into a mixing apparatus equipped with a solution mixer or separate mixing heads for the respective solutions.

The forming mold is not particularly limited, but a metal mold including a male die and a female die can be used. The mold used is not necessarily a rigid and expensive die. Not only a metallic mold, but also a resin die or a simple formwork can be used. When a metallic mold is used, examples of the material of the mold include, but should not be limited to, steel, aluminum, zinc alloys, nickel, copper, chromium, and the like. The metallic mold can be produced by any method including casting, forging, thermal spraying, electrocasting, and the like. The metallic mold may be plated. The structure of the mold may be designed depending on the pressure used for injecting a polymerizable composition into the mold. The clamping pressure of the metal mold is usually about 0.1 to 9.8 MPa as gauge pressure.

The mold temperature can be suitably controlled depending on the type of the norbornene-based monomer used, but is preferably a temperature 5°C or more higher than the freezing point of the norbornene-based monomer, more preferably a temperature 10°C or more higher than the freezing point.

After the polymerizable composition loses fluidity through bulk polymerization, in order to achieve desired mechanical properties by sufficient polymerization, the polymerizable composition is preferably cured by two-step curing by heating the mold. The heating temperature is preferably 90 to 200°C, more preferably 100 to 170°C, still more preferably 110 to 150°C.

Examples of the method for controlling the mold temperature include mold temperature control with a heater; temperature control by circulating cold water and hot water through piping embedded in the mold, temperature control with a medium such as oil, and the like.

A norbornene-based resin can be obtained, for example, by opening and removing the mold after the bulk polymerization.

### EXAMPLES

Hereinafter, the present invention will be described by way of Examples, but these Examples should not be construed as limitations. To be noted, "parts" and "%" are mass-based unless otherwise specified.

### <Example 1>

### (Preparation of catalyst solution)

2 Parts of a ruthenium-carbene complex (benzylidene(1,3-dimesitylimidazolidin-2-ylidene) (tricyclohexylphosphine)ruthenium dichloride, C848) represented by Formula (6) below as a metathesis polymerization catalyst and 100 parts of triphenylphosphine (TPP) were dissolved in 100 parts of cyclopentanone to prepare a catalyst solution. The amount of triphenylphosphine based on phosphorus atoms contained in the resulting catalyst solution relative to 1 mol of ruthenium in the ruthenium-carbene complex represented by Formula (6) below was 162 mol:

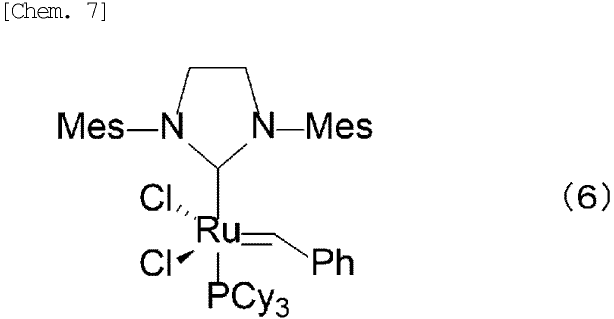

### (Catalyst solution storage test)

The catalyst solution prepared above was stored for 1 month under a nitrogen atmosphere at 25°C.

### (Preparation of polymerizable composition, and measurement of curing time)

Then, independently of the preparation above, a monomer solution containing 10,000 parts of an RIM Monomer (available from Zeon Corporation) was prepared. The total amount of the resulting monomer solution and the total amount of the above-described catalyst solution stored for 1 month were mixed in a glass or plastic vessel equipped with a thermometer including a thermocouple to prepare a polymerizable composition, and the curing time of the polymerizable composition was measured. The measurement of the curing time was performed using an initial temperature of 30°C, and the time point when the measured temperature reached 100°C by the heat of polymerization was defined as a curing time. The results are shown in Table 1. The RIM Monomer above contained about 90 parts of dicyclopentadiene and about 10 parts of tricyclopentadiene (contained about 90% of dicyclopentadiene and about 10% of tricyclopentadiene).

### <Example 2>

A catalyst solution prepared in the same manner as in Example 1 was stored under the same conditions as those in Example 1 for 1 month. A monomer solution was obtained in the same manner as in Example 1 except that 100 parts of triphenylphosphine (TPP) was further blended. Then, the total amount of the resulting monomer solution and the total amount of the catalyst solution stored for 1 month were mixed to prepare a polymerizable composition, and the curing time of the polymerizable composition was measured in the same manner as in Example 1. The results are shown in Table 1.

The amount of triphenylphosphine based on phosphorus atoms contained in the resulting polymerizable composition relative to 1 mol of ruthenium in the ruthenium-carbene complex represented by Formula (6) above was 324 mol (sum of 162 mol for triphenylphosphine added to the catalyst solution and 162 mol for triphenylphosphine added when the polymerizable composition was prepared).

### <Comparative Example 1>

A catalyst solution was prepared in the same manner as in Example 1 except that triphenylphosphine (TPP) was not blended. The resulting catalyst solution was stored under the same conditions as those in Example 1 for 1 month. A monomer solution was prepared in the same manner as in Example 1. The total amount of the resulting monomer solution and the total amount of the catalyst solution stored for 1 month were mixed to prepare a polymerizable composition, and the curing time of the polymerizable composition was measured in the same manner as in Example 1. The results are shown in Table 1.

### [Table 1]

**Table 1**

| | | | Example | | Comp. Ex. |
|---|---|---|---|---|---|
| | | | 1 | 2 | 1 |
| Polymerizable composition | Catalyst solution | Catalyst (C848) [parts] | 2 | 2 | 2 |
| | | TPP [parts] | 100 | 100 | - |
| | | Cyclopentanone [parts] | 100 | 100 | 100 |
| | | Period of storing catalyst solution | 1 month | 1 month | 1 month |
| | Monomer solution | TPP [parts] | - | 100 | - |
| | | Monomer [parts] | 10000 | 10000 | 10000 |
| | Curing time [s] | | 278 | 494 | >3600 |
| Physical properties of cured product | Bending strength [MPa] | | - | - | - |
| | Bending elastic modulus [GPa] | | - | - | - |
| | HDT (edgewise) [°C] | | - | - | - |
| | Heating weight loss [% by weight] | | - | - | - |

| | | | | | |
|---|---|---|---|---|---|
| "Catalyst (C848)" refers to benzylidene(1,3-dimesitylimidazolidin-2-ylidene) (tricyclohexylphosphine)ruthenium dichloride, and "TPP" refers to triphenylphosphine. | | | | | |

As shown in Table 1, when triphenylphosphine (TPP) as a coordinating compound containing a phosphorus atom was contained in an amount such that the amount of triphenylphosphine based on phosphorus atoms relative to 1 mol of ruthenium in the ruthenium-carbene complex was in the range of 6 to 1000 mol, the resulting catalyst solutions demonstrated high catalytic activity even after long-term storage (storage for 1 month), and thus, the curing reaction proceeded in a relatively short time (Examples 1 and 2).

On the other hand, when the catalyst solution without triphenylphosphine (TPP) as a coordinating compound containing a phosphorus atom was stored for a long time (stored for 1 month), its catalytic activity was reduced, the curing reaction proceeded insufficiently, and the curing reaction did not sufficiently proceed even after 3600 seconds had passed (Comparative Example 1).

### <Example 3>

### (Preparation of catalyst solution)

2 Parts of a ruthenium-carbene complex ((1,3-dimesitylimidazolidin-2-ylidene) (3-methyl-2-buten-1-ylidene) (tricyclopentylphosphine)ruthenium dichloride, C827) represented by Formula (7) below as a metathesis polymerization catalyst and 100 parts of triphenylphosphine (TPP) were dissolved in 100 parts of cyclopentanone to prepare a catalyst solution. The amount of triphenylphosphine based on phosphorus atoms contained in the resulting catalyst solution relative to 1 mol of ruthenium in the ruthenium-carbene complex represented by Formula (7) below was 158 mol.

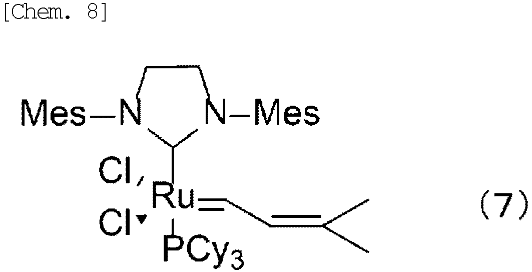

### (Catalyst solution storage test)

The catalyst solution prepared above was stored under a nitrogen atmosphere at 25°C for 6 months.

### (Preparation of polymerizable composition, and measurement of curing time)

Then, independently of the preparation above, a monomer solution containing 10,000 parts of an RIM Monomer (available from Zeon Corporation) was prepared. A half of the total amount of the resulting monomer solution and a half of the total amount of the above-described catalyst solution stored for 6 months were mixed in a glass or plastic vessel equipped with a thermometer including a thermocouple to prepare a polymerizable composition, and the curing time of the polymerizable composition was measured. The measurement of the curing time was performed using an initial temperature of 30°C, and the time point when the measured temperature reached 100°C by the heat of polymerization was defined as a curing time. The results are shown in Table 2. The RIM Monomer above contained about 90 parts of dicyclopentadiene and about 10 parts of tricyclopentadiene (contained about 90% of dicyclopentadiene and about 10% of tricyclopentadiene).

### (Production of norbornene-based resin)

A mold-releasing treated metal mold made of aluminum 5052 having an inside length of 300 mm, a width of 250 mm, and a depth of 4 mm was prepared, and the metal mold was covered with a flat plate made of aluminum 5052. Next, the temperature of the mold was adjusted to 25°C. Thereafter, the remainder of the monomer solution obtained above and the remainder of the above-described catalyst solution stored for 6 months were mixed, and the mold was completely filled with the mixture. After the mold was left to stand for 1 hour, the mold was cooled to 10°C, and subsequently was left to stand for 1 hour. As a result, the polymerizable composition lost fluidity inside the mold. Subsequently, the mold was heated to 120°C, and was left to stand for 1 hour. Next, the mold was cooled to normal temperature, and the content was released from the mold to give a norbornene-based resin.

The resulting norbornene-based resin was measured for bending strength, bending elastic modulus, HDT (edgewise), and heating weight loss according to the following methods. The results are shown in Table 2.

### · Bending strength, bending elastic modulus

Bending strength and bending elastic modulus were measured according to ISO178 using a universal testing machine AG-5000 (available from SHIMADZU CORPORATION) .

### · HDT (edgewise)

HDT (edgewise) was measured according to ISO75-2 using an HDT testing machine (available from Toyo Seiki Seisaku-sho, Ltd.).

### · Heating weight loss

Weight loss from the weight at 30°C was measured by TG/DTA up to 150°C at a heating rate of 20°C/min using TG/DTA6200 (available from Hitachi High-Tech Science Corporation).

### <Example 4>

A catalyst solution prepared in the same manner as in Example 3 was stored under the same conditions as those in Example 3 for 6 months. A monomer solution was obtained in the same manner as in Example 3 except that 200 parts of triphenylphosphine (TPP) was further blended. Then, a half of the total amount of the resulting monomer solution and a half of the total amount of the catalyst solution stored for 6 months were mixed to prepare a polymerizable composition, and the curing time of the polymerizable composition was measured in the same manner as in Example 3. A norbornene-based resin was obtained in the same manner as in Example 3 using the remainder of the resulting monomer solution and the remainder of the catalyst solution stored for 6 months, and was evaluated in the same manner as in Example 3. The results are shown in Table 2.

The amount of triphenylphosphine based on phosphorus atoms contained in the resulting polymerizable composition relative to 1 mol of ruthenium in the ruthenium-carbene complex represented by Formula (7) above was 474 mol (sum of 162 mol for triphenylphosphine added to the catalyst solution and 324 mol for triphenylphosphine added when the polymerizable composition was prepared).

### <Example 5>

A catalyst solution prepared in the same manner as in Example 3 was stored under the same conditions as those in Example 3 for 6 months. A monomer solution was obtained in the same manner as in Example 3 except that 200 parts of triphenylphosphine (TPP) and 100 parts of trimethoxyphenylphosphine (TMPP) were further blended. Then, a half of the total amount of the resulting monomer solution and a half of the total amount of the catalyst solution stored for 6 months were mixed to prepare a polymerizable composition, and the curing time of the polymerizable composition was measured in the same manner as in Example 3. A norbornene-based resin was obtained in the same manner as in Example 3 using the remainder of the resulting monomer solution and the remainder of the catalyst solution stored for 6 months, and was evaluated in the same manner as in Example 3. The results are shown in Table 2.

The total amount of triphenylphosphine and trimethoxyphenylphosphine contained in the resulting polymerizable composition based on phosphorus atoms relative to 1 mol of ruthenium in the ruthenium-carbene complex represented by Formula (7) above was 591 mol (sum of 158 mol for triphenylphosphine and trimethoxyphenylphosphine added to the catalyst solution and 433 mol for triphenylphosphine and trimethoxyphenylphosphine added when the polymerizable composition was prepared).

### <Example 6>

1 Part of a ruthenium-carbene complex ((1,3-dimesitylimidazolidin-2-ylidene) (3-methyl-2-buten-1-ylidene) (tricyclopentylphosphine)ruthenium dichloride, C827) represented by Formula (7) above as a metathesis polymerization catalyst and 20 parts of trimethoxyphenylphosphine (TMPP) were dissolved in 90 parts of cyclopentanone to prepare a catalyst solution. The amount of trimethoxyphenylphosphine based on phosphorus atoms contained in the resulting catalyst solution relative to 1 mol of ruthenium in the ruthenium-carbene complex represented by Formula (7) below was 47 mol. Next, the catalyst solution prepared above was stored under a nitrogen atmosphere at 25°C for 6 months.

The total amount of the monomer solution prepared in the same manner as in Example 3 and the total amount of the catalyst solution stored for 6 months were mixed to prepare a polymerizable composition, and the curing time of the polymerizable composition was measured in the same manner as in Example 3. The results are shown in Table 1.

The amount of trimethoxyphenylphosphine contained in the resulting polymerizable composition based on phosphorus atoms relative to 1 mol of ruthenium in the ruthenium-carbene complex represented by Formula (7) above was 47 mol.

### <Example 7>

2 Parts of a ruthenium-carbene complex ((1,3-dimesitylimidazolidin-2-ylidene) (3-methyl-2-buten-1-ylidene) (tricyclopentylphosphine)ruthenium dichloride, C827) represented by Formula (7) above as a metathesis polymerization catalyst and 40 parts of trimethoxyphenylphosphine (TMPP) were dissolved in 180 parts of cyclopentanone to prepare a catalyst solution. The amount of trimethoxyphenylphosphine based on phosphorus atoms contained in the resulting catalyst solution relative to 1 mol of ruthenium in the ruthenium-carbene complex represented by Formula (7) below was 47 mol. Next, the catalyst solution prepared above was stored under a nitrogen atmosphere at 25°C for 6 months.

Then, the total amount of the monomer solution prepared in the same manner as in Example 3 and the total amount of the catalyst solution stored for 6 months were mixed to prepare a polymerizable composition, and the curing time of the polymerizable composition was measured in the same manner as in Example 3. The results are shown in Table 1.

The amount of trimethoxyphenylphosphine based on phosphorus atoms contained in the resulting polymerizable composition relative to 1 mol of ruthenium in the ruthenium-carbene complex represented by Formula (7) above was 47 mol.

### <Comparative Example 2>

A catalyst solution was prepared in the same manner as in Example 3 except that triphenylphosphine (TPP) was not blended, and the resulting catalyst solution was stored under the same conditions as those in Example 3 for 6 months. A monomer solution was prepared in the same manner as in Example 3. Then, the total amount of the resulting monomer solution and the total amount of the catalyst solution stored for 6 months were mixed to prepare a polymerizable composition, and the curing time of the polymerizable composition was measured in the same manner as in Example 3. The results are shown in Table 2.

### [Table 2]

**Table 2**

| | | | Example | | | | | Comp. Ex. |
|---|---|---|---|---|---|---|---|---|
| | | | 3 | 4 | 5 | 6 | 7 | 2 |
| Polymerizable com position | Catalyst solution | Catalyst (C827) [parts] | 2 | 2 | 2 | 1 | 2 | 2 |
| | | TPP [parts] | 100 | 100 | 100 | - | - | - |
| | | TMPP [parts] | - | - | - | 20 | 40 | - |
| | | Cyclopentanone [parts] | 100 | 100 | 100 | 90 | 180 | 100 |
| | | Period of storing catalyst solution | 6 months | 6 months | 6 months | 6 months | 6 months | 6 months |
| | Monomer solution | TPP [parts] | - | 200 | 200 | - | - | - |
| | | TMPP [parts] | - | - | 100 | - | - | - |
| | | Monomer [parts] | 10000 | 10000 | 10000 | 10000 | 10000 | 10000 |
| | Curing time [s] | | 210 | 540 | 1551 | 573 | 414 | >3600 |
| Physical properties of cured product | Bending strength [MPa] | | 77 | 81 | 81 | - | - | - |
| | Bending elastic modulus [GPa] | | 2 | 2.01 | 2.038 | - | - | - |
| | HDT (edgewise) [°C] | | 101 | 101 | 97 | - | - | - |
| | Heating weight loss [% by weight] | | 0.7 | 0.4 | 0.4 | - | - | - |

| | | | | | | | | |
|---|---|---|---|---|---|---|---|---|
| "Catalyst (C827)" refers to (1,3-dimensitylimidazolidin-2-ylidene) (3- methyl-2-buten-1-ylidene) (tricyclopentylphosphine)ruthenium dichloride, "TPP" refers to triphenylphosphine, and "TMPP" refers to trimethoxyphenylphosphine. | | | | | | | | |

As shown in Table 2, when triphenylphosphine (TPP) and trimethoxyphenylphosphine (TMPP) as coordinating compounds containing a phosphorus atom were contained in an amount such that the amount of triphenylphosphine based on phosphorus atoms relative to 1 mol of ruthenium in the ruthenium-carbene complex was in the range of 6 to 1000 mol, the resulting catalyst solutions demonstrated high catalytic activity even after long-term storage (storage for 6 months), and thus, the curing reaction proceeded in a relatively short time (Examples 3 to 5).

On the other hand, when the catalyst solution without triphenylphosphine (TPP) as a coordinating compound containing a phosphorus atom was stored for a long time (stored for 6 months), its catalytic activity was reduced, the curing reaction proceeded insufficiently, and the curing reaction did not sufficiently proceed even after 3600 seconds had passed (Comparative Example 2).

## Claims

1. A catalyst solution comprising a metathesis polymerization catalyst, a coordinating compound containing a phosphorus atom, and a solvent,
wherein the metathesis polymerization catalyst is a ruthenium-carbene complex represented by General Formula (1) or (2) below, and
the coordinating compound containing a phosphorus atom is contained in an amount such that 6 to 1000 mol of phosphorus atoms are contained relative to 1 mol of ruthenium atoms in the metathesis polymerization catalyst: 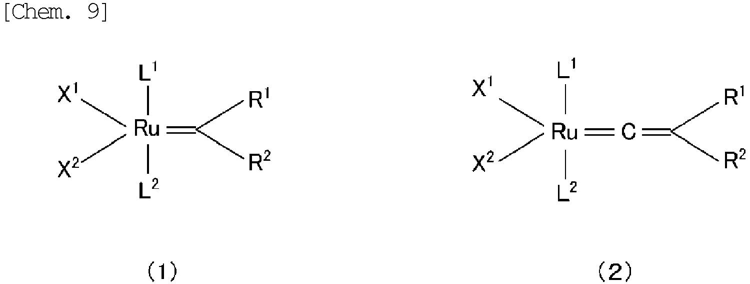 where in General Formulae (1) and (2) above, R¹ and R² each independently represent a hydrogen atom; a halogen atom; or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring; X¹ and X² each independently represent any anionic ligand; L¹ and L² each represent a heteroatom-containing carbene compound or phosphines; and at least one of L¹ and L² is phosphines.

2. The catalyst solution according to claim 1, wherein L¹ is a compound represented by General Formula (3) or (4) below, and L² is phosphines: 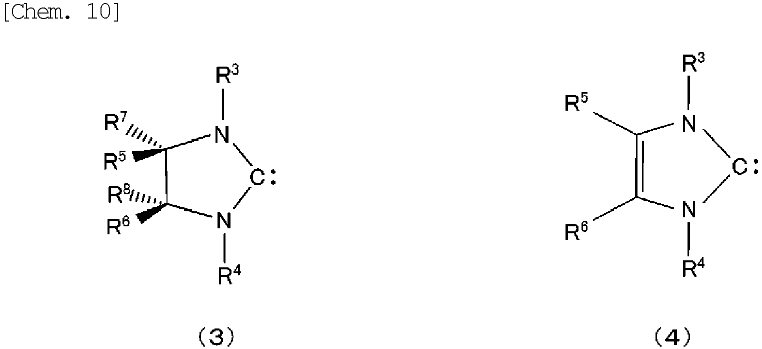 where in General Formulae (3) and (4) above, R³, R⁴, R⁵, R⁶, R⁷, and R⁸ each independently represent hydrogen atom; halogen atom; or a C₁ to C₂₀ organic group which may contain a halogen atom, an oxygen atom, a nitrogen atom, a sulfur atom, a phosphorus atom, or a silicon atom, and these groups may be substituted, or may be bonded to each other to form a ring.

3. The catalyst solution according to claim 1 or 2, wherein the phosphines are an optionally substituted trialkylphosphine.

4. The catalyst solution according to any one of claims 1 to 3, wherein the coordinating compound containing a phosphorus atom is a compound represented by General Formula (5) below: 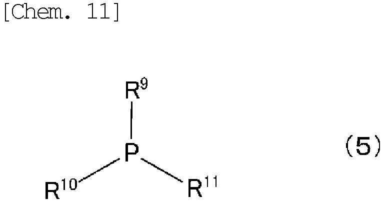 where in General Formula (5) above, R⁹ to R¹¹ each independently represent an optionally substituted alkyl group or an optionally substituted aryl group.

5. A polymerizable composition comprising the catalyst solution according to any one of claims 1 to 4, and a norbornene-based monomer as a polymerizable monomer.
